(19) Europäisches Patentamt / European Patent Office / Office européen des brevets

(11) **EP 3 701 247 B1**

(12) **FASCICULE DE BREVET EUROPEEN**

(45) Date de publication et mention
de la délivrance du brevet:
**01.12.2021 Bulletin 2021/48**

(21) Numéro de dépôt: **18800704.1**

(22) Date de dépôt: **18.10.2018**

(51) Int Cl.:
*G01N 21/3504* *(2014.01)*   *G01N 21/03* *(2006.01)*

(86) Numéro de dépôt international:
**PCT/FR2018/052607**

(87) Numéro de publication internationale:
**WO 2019/081838 (02.05.2019 Gazette 2019/18)**

(54) **DÉTECTEUR DE GAZ COMPACT**

KOMPAKTER GASSENSOR

COMPACT GAS DETECTOR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **23.10.2017 FR 1759994**

(43) Date de publication de la demande:
**02.09.2020 Bulletin 2020/36**

(73) Titulaire: **Elichens
38000 Grenoble (FR)**

(72) Inventeur: **DUPREZ, Hélène
38170 Seyssinet-Pariset (FR)**

(74) Mandataire: **INNOV-GROUP
310, avenue Berthelot
69372 Lyon Cedex 08 (FR)**

(56) Documents cités:
**EP-A1- 3 208 601          WO-A1-98/09152
WO-A1-2004/042374     WO-A1-2006/135212
WO-A2-2010/101430     FR-A1- 3 022 999**

## Description

## DOMAINE TECHNIQUE

Le domaine technique de l'invention est un capteur optique de gaz, et plus particulièrement un capteur infrarouge non dispersif.

## ART ANTERIEUR

Le recours à des méthodes optiques pour l'analyse d'un gaz est assez fréquent. Des dispositifs permettent de déterminer la composition d'un gaz en se basant sur le fait que les espèces composant un gaz présentent des propriétés spectrales d'absorption différentes les unes des autres. Ainsi, connaissant une bande spectrale d'absorption d'une espèce gazeuse, sa concentration peut être déterminée par une estimation de l'absorption de la lumière traversant le gaz, en utilisant la loi de Beer Lambert. Ce principe permet une estimation de la concentration d'une espèce gazeuse présente dans le milieu.

La source de lumière est usuellement une source émettant dans l'infrarouge, la méthode utilisée étant usuellement désignée par le terme anglosaxon "NDIR detection", l'acronyme NDIR signifiant Non Dispersive Infra-Red. Un tel principe a été fréquemment mis en œuvre, et est par exemple décrit dans de nombreux documents, par exemple dans US5026992 ou WO2007064370.

Selon les procédés les plus courants, le gaz analysé s'étend entre une source de lumière et un photodétecteur, dit photodétecteur de mesure, ce dernier étant destiné à mesurer une onde lumineuse transmise par le gaz à analyser, et partiellement absorbée par ce dernier. Les procédés comprennent généralement une mesure d'une onde lumineuse, dite onde lumineuse de référence, émise par la source, et non absorbée par le gaz analysé.

La comparaison entre l'onde lumineuse en présence de gaz et l'onde lumineuse sans gaz permet de caractériser le gaz. Il s'agit par exemple de déterminer une quantité d'une espèce gazeuse dans le gaz, selon la technologie désignée par le terme "NDIR par absorption". Il peut également s'agir d'estimer une quantité de particules dans le gaz, en détectant une lumière diffusée par ce dernier selon une plage angulaire de diffusion prédéterminée.

L'onde lumineuse de référence est mesurée par un photodétecteur de référence. Il peut s'agir d'un photodétecteur de référence différent du photodétecteur de mesure, et agencé de façon à être disposé face à la source de lumière le photodétecteur de référence étant associé à un filtre optique de référence. Le filtre optique de référence définit une bande spectrale de référence, dans laquelle le gaz à analyser ne présente pas d'absorption significative.

Les documents EP2711687 et EP2891876 décrivent des capteurs de gaz comportant des enceintes, dans lesquelles un ou plusieurs miroirs sont agencés. Les miroirs permettent de maximiser le trajet de la lumière dans l'enceinte, et de focaliser les rayons lumineux ayant traversé le gaz sur le ou les photodétecteurs. Cela permet d'augmenter la sensibilité de détection tout en utilisant des dispositifs compacts.

Le document EP3208601 décrit un capteur de gaz compact, formé de parois réfléchissantes dont le profil est elliptique. Le demandeur a estimé que la configuration décrite dans ce document pouvait être améliorée, de façon à optimiser l'atténuation de l'onde lumineuse se propageant ente la source de lumière et le photodétecteur de mesure, tout en respectant un encombrement extérieur contraint.

Le document WO 2004/042374 A1 décrit un capteur de gaz comportant une enceinte, apte à recevoir le gaz, le capteur comportant également : une source de lumière, configurée pour émettre une onde lumineuse se propageant dans l'enceinte en formant, à partir de la source de lumière, un cône d'émission, dit premier cône; un photodétecteur de mesure apte à détecter l'onde lumineuse émise par la source de lumière et s'étant propagé à travers l'enceinte; une paroi périphérique comportant : une première surface réfléchissante, de rang 1, courbe, et présentant un premier foyer et un deuxième foyer, la première surface réfléchissante étant disposée face à la source de lumière ; au moins une surface réfléchissante de rang n, courbe, n étant un entier strictement supérieur à 1, chaque surface de rang n présentant : - un premier foyer, confondu avec le deuxième foyer d'une surface réfléchissante de rang précédent n-1 ; - un deuxième foyer, distinct du premier foyer, confondu avec le premier foyer d'une surface de rang suivant n +1 ; une dernière surface réfléchissante, de rang N, courbe, comportant un premier foyer, confondu avec le deuxième foyer d'une surface réfléchissante de rang précédent N-1, la dernière surface réfléchissante comportant également un deuxième foyer; de telle sorte que l'onde lumineuse émise par la source de lumière est successivement réfléchie par les surfaces réfléchissantes, selon leur rang respectif, avant de converger vers le deuxième foyer de la dernière surface réfléchissante en formant un dernier cône de lumière, le photodétecteur de mesure étant disposé, par rapport à la dernière surface réfléchissante de manière à s'étendre dans le dernier cône de lumière.

L'objectif de l'invention est de proposer un capteur de gaz aux performances optimisées, privilégiant notamment la compacité et la sensibilité.

## EXPOSE DE L'INVENTION

Un premier objet de l'invention est un capteur de gaz comportant une enceinte, apte à recevoir le gaz, le capteur comportant également :

- une source de lumière, apte à émettre une onde lumineuse se propageant dans l'enceinte en formant, à partir de la source de lumière, un cône d'émission, dit premier cône;

■ un photodétecteur de mesure apte à détecter l'onde lumineuse ayant traversé l'enceinte;

le capteur étant tel que l'enceinte s'étend entre deux parois transversales, disposées l'une face à l'autre, les parois transversales étant reliées l'une à l'autre par une paroi périphérique, s'étendant entre les parois transversales, la paroi périphérique comportant :

■ une première surface réfléchissante, de rang 1, courbe, d'excentricité inférieure à 0.7, et présentant un premier foyer et un deuxième foyer, la première surface réfléchissante étant disposée face à la source de lumière ;

■ au moins une surface réfléchissante de rang $n$, courbe, $n$ étant un entier strictement supérieur à 1, chaque surface de rang $n$ présentant :

- un premier foyer, confondu avec le deuxième foyer d'une surface réfléchissante de rang précédent ;
- un deuxième foyer, distinct du premier foyer, et confondu avec le premier foyer d'une surface de rang suivant ;

une dernière surface réfléchissante, de rang N, courbe, comportant un premier foyer, confondu avec le deuxième foyer d'une surface réfléchissante de rang précédent, la dernière surface réfléchissante comportant également un deuxième foyer;

de telle sorte que l'onde lumineuse émise par la source de lumière est successivement réfléchie par les surfaces réfléchissantes, selon leur rang respectif, avant de converger vers le deuxième foyer de la dernière surface réfléchissante en formant un dernier cône de lumière, le photodétecteur de mesure étant disposé, par rapport à la dernière surface réfléchissante, de manière à s'étendre dans le dernier cône de lumière.

La première surface réfléchissante peut être elliptique et décrire, dans un plan transversal XY, une partie d'une ellipse, dite ellipse d'admission.

Ainsi, l'onde lumineuse émise par la source de lumière se propage successivement vers les surfaces réfléchissantes de rang 1, 2....N avant d'atteindre le photodétecteur. Le nombre N est un entier strictement positif. Il est strictement supérieur à 3 ou égal à 3. Il peut notamment être égal à 4 ou à 5. Les N surfaces réfléchissantes sont distinctes les unes des autres.

De préférence, le dispositif comporte un élément réfléchissant disposé au niveau du deuxième foyer d'au moins une surface réfléchissante de rang $n$, voire au niveau du deuxième foyer de chaque surface réfléchissante de rang $n$, avec 1< $n$ < N. Ainsi, lorsque 1 $\leq$ $n$ < N, à au moins une surface réfléchissante de rang $n$,

voire à chaque surface réfléchissante de rang $n$, est associé un élément réfléchissant, ce dernier étant disposé au niveau du deuxième foyer de ladite surface. Deux éléments réfléchissants, respectivement associés à deux surfaces différentes, peuvent être confondus. Au moins un élément réfléchissant, voire chaque élément réfléchissant, peut être plan. Il peut en particulier s'agir d'un miroir plan.

Selon un mode de réalisation, au moins une surface réfléchissante courbe, voire chaque surface réfléchissante courbe, est elliptique. Selon un autre mode de réalisation, au moins une surface réfléchissante est courbe, et présente deux foyers distincts l'un de l'autre, ainsi qu'un petit diamètre et un grand diamètre.

Selon un mode de réalisation, le premier foyer de la première surface réfléchissante est confondu avec le sommet du premier cône.

Selon un mode de réalisation préféré, le capteur comporte également :

- un photodétecteur de référence;
- une surface réfléchissante courbe, dite de référence, comportant un premier foyer et un deuxième foyer, le premier foyer de la surface de référence étant situé dans un cône de lumière, dit premier cône de référence, émis par la source de lumière ;

de telle sorte que la surface de référence réfléchit une partie du premier cône de référence vers le photodétecteur de référence, pour former un deuxième cône de référence convergeant vers le deuxième foyer de la surface de référence, le photodétecteur de référence s'étendant dans le deuxième cône de référence, et de préférence au niveau du deuxième foyer de la surface de référence, ou à faible distance de ce dernier.

Le premier foyer de la surface de référence peut notamment être confondu avec le sommet du premier cône de référence. Le premier foyer de la surface de référence est de préférence disposé au niveau de la source de lumière. La surface de référence est de préférence elliptique. Selon un mode de réalisation, le capteur comporte quatre surfaces réfléchissantes distinctes, s'étendant successivement entre la source de lumière et le photodétecteur de mesure, le photodétecteur de mesure étant configuré pour détecter une onde lumineuse réfléchie par la quatrième surface et convergeant vers le deuxième foyer de cette dernière. La quatrième surface forme alors la dernière surface réfléchissante.

Selon un mode de réalisation, le capteur comporte cinq surfaces réfléchissantes distinctes, s'étendant successivement entre la source de lumière et le photodétecteur de mesure, le photodétecteur de mesure étant configuré pour détecter une onde lumineuse réfléchie par la cinquième surface et convergeant vers le deuxième foyer de cette dernière. La cinquième surface forme alors la dernière surface réfléchissante.

Selon un mode de réalisation, le capteur comporte au moins quatre surfaces réfléchissantes (N $\geq$4).

La deuxième surface réfléchissante et la troisième surface réfléchissante, s'étendent respectivement selon deux parties distinctes d'une même ellipse, dite ellipse intermédiaire. Dans ce cas, l'ellipse d'admission peut présenter un grand axe formant un angle compris entre 80° et 100° avec un grand axe de l'ellipse intermédiaire. L'excentricité de l'ellipse intermédiaire est de préférence inférieure à celle de l'ellipse d'admission, en étant par exemple inférieure à 0.5, voire inférieure à 0.3. Toujours selon ce mode de réalisation, le capteur peut comporter un élément réfléchissant plan sur lequel sont disposés:

- le deuxième foyer de la première surface, ce dernier étant confondu avec le premier foyer de la deuxième surface ainsi qu'avec le deuxième foyer de la troisième surface et avec le premier foyer de la quatrième surface ;
- le deuxième foyer de la deuxième surface, ce dernier étant confondu avec le premier foyer de la troisième surface.

Selon un mode de réalisation, dans la paroi transversale est, au moins partiellement, ouverte ou transparente, de manière à permettre une propagation de l'onde lumineuse émise par la source de lumière, et/ou de l'onde lumineuse détectée par le photodétecteur de mesure. De façon alternative, la source de lumière et/ou le photodétecteur de mesure peuvent s'étendre à l'intérieur de l'enceinte.

Un deuxième objet de l'invention est un procédé d'analyse d'un gaz à l'aide d'un capteur selon le premier objet de l'invention, le procédé comportant les étapes suivantes:

- introduction du gaz dans l'enceinte du capteur ;
- illumination du gaz à l'aide de la source de lumière;
- mesure d'une intensité lumineuse d'une onde lumineuse ,émise par la source de lumière, et s'étant propagée à travers l'enceinte, par le photodétecteur de mesure;
- détermination d'une quantité d'une espèce gazeuse dans le gaz, à partir de l'intensité lumineuse mesurée.

D'autres avantages et caractéristiques ressortiront plus clairement de la description qui va suivre de modes particuliers de réalisation de l'invention, donnés à titre d'exemples non limitatifs, et représentés sur les figures listées ci-dessous.

## FIGURES

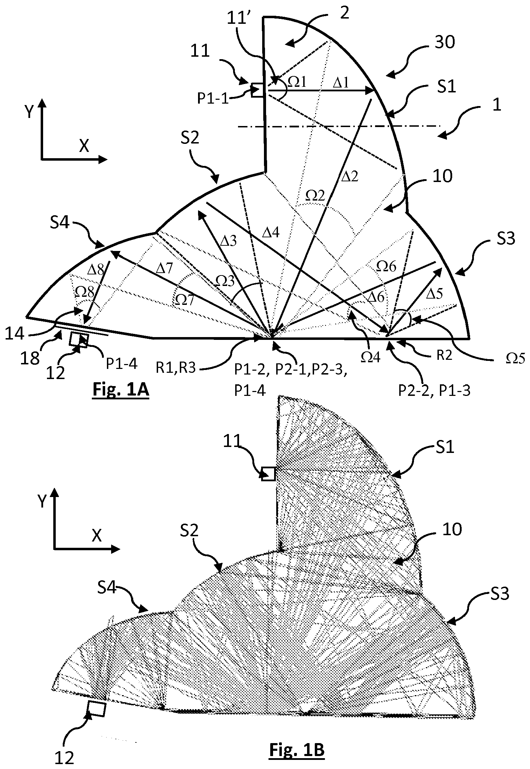

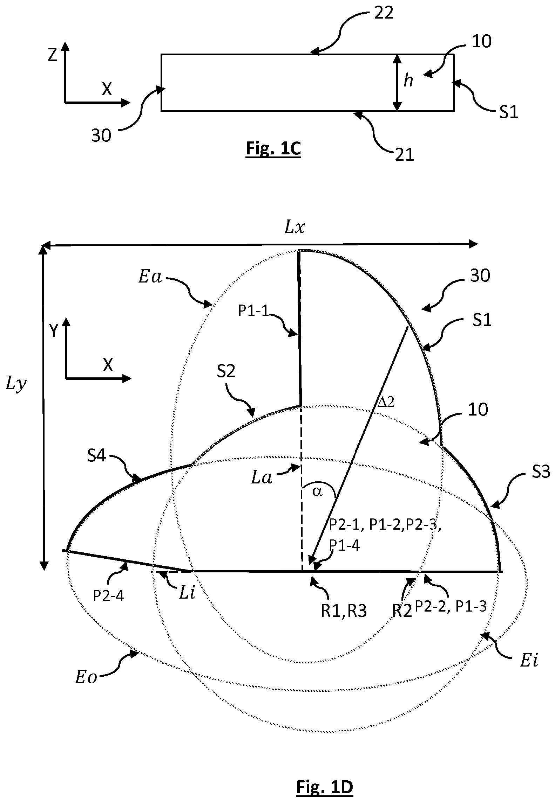

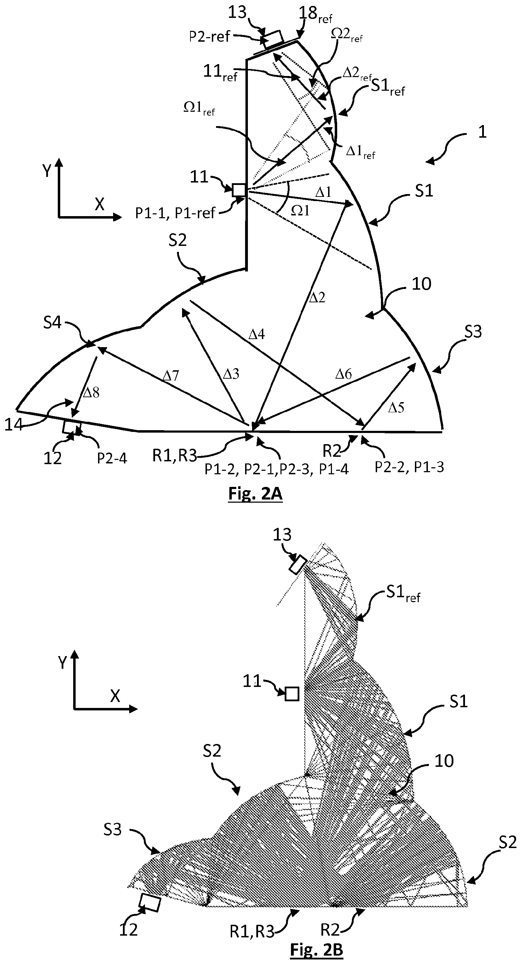

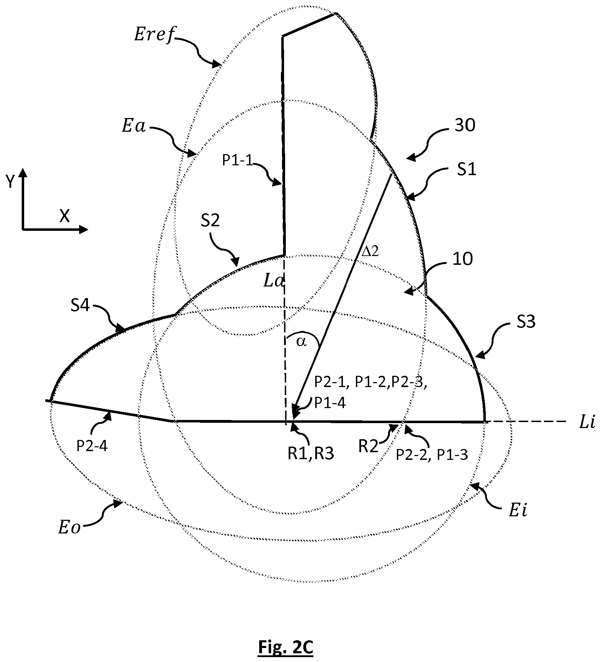

Les figures 1A, 1B et 1D sont différentes représentations d'un mode de réalisation de l'invention, dans un plan transversal XY. La figure 1C est une vue en coupe d'un capteur selon l'invention, selon une ligne représentée en tirets mixtes sur la figure 1A, et dans un plan perpendiculaire au plan transversal. Selon ce mode de réalisation, le capteur de gaz comporte quatre surfaces réfléchissantes elliptiques distinctes, s'étendant selon le trajet de la lumière entre une source de lumière et un photodétecteur de mesure. Les figures 2A, 2B et 2C sont différentes représentations d'une variante du mode de réalisation représenté sur les figures 1A à 1D. Ce mode de réalisation inclut notamment une surface elliptique de référence et un photodétecteur de référence.

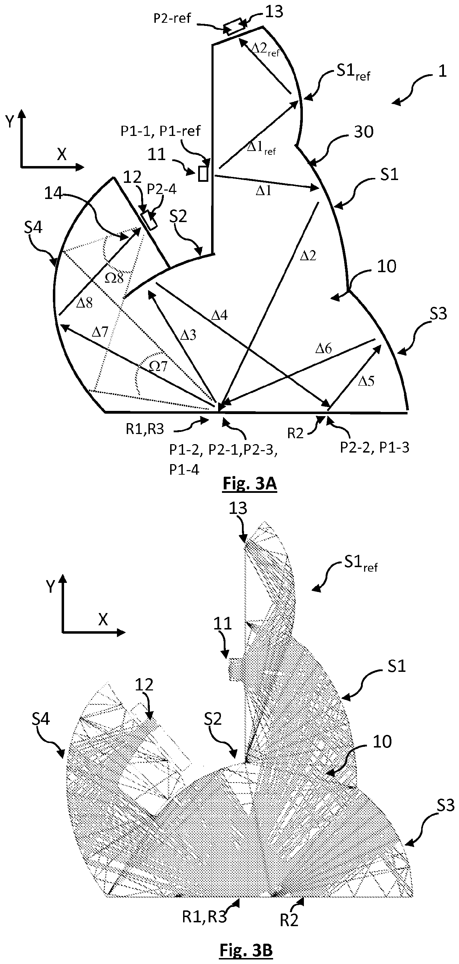

Les figures 3A et 3B illustrent un autre mode de réalisation de l'invention.

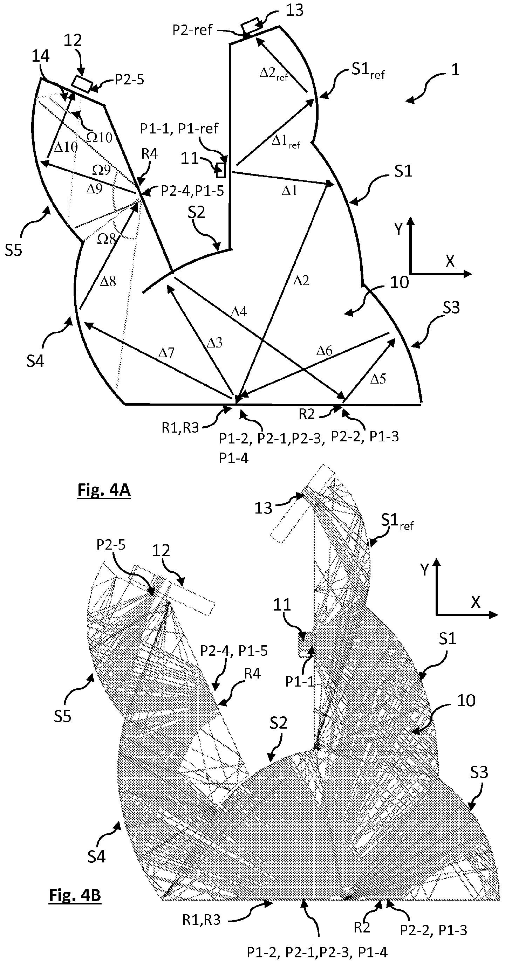

Les figures 4A et 4B représentent un mode de réalisation de l'invention. Selon ce mode de réalisation, le capteur de gaz comporte cinq surfaces réfléchissantes elliptiques distinctes, s'étendant selon le trajet de la lumière entre une source de lumière et un photodétecteur de mesure.

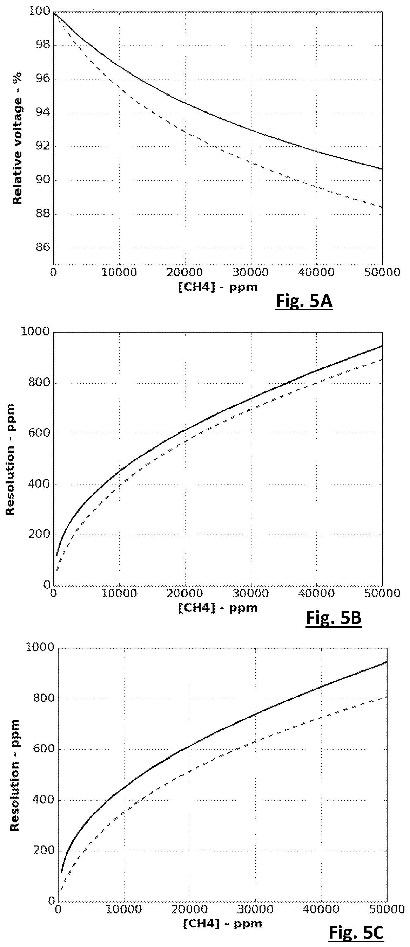

Les figures 5A et 5B illustrent des simulations réalisées en considérant une configuration de référence, décrite dans l'art antérieur, et une configuration décrite en lien avec les figures 2A à 2C. La figure 5C montre des simulations réalisées en considérant une configuration telle que décrite dans l'art antérieur, et une configuration décrite en lien avec les figures 3A et 3B.

## EXPOSE DE MODES DE REALISATION PARTICULIERS

Les figures 1A à 1D représentent un exemple de capteur de gaz selon l'invention. Le capteur comporte une enceinte 10, apte à recevoir un gaz 2 à analyser. L'enceinte est délimitée par deux parois 21, 22, dites parois transversales, s'étendant selon un plan transversal XY. Les parois transversales sont représentées sur la figure 1C. Elles sont distantes d'une hauteur h, typiquement comprise entre 100 $\mu$m et 1 cm, et de préférence entre 500 $\mu$m et 1 cm.

Les parois transversales peuvent être parallèles au plan transversal XY, ou sensiblement parallèles à ce dernier, le terme sensiblement indiquant qu'une tolérance angulaire, par exemple +/- 20° ou +/- 30° est admise. Elles peuvent être planes ou incurvées.

L'enceinte comporte également une paroi 30, dite paroi périphérique, délimitant l'enceinte, et s'étendant entre la première paroi transversale 21 et la deuxième paroi transversale 22. La paroi périphérique 30 s'étend autour d'un axe longitudinal Z, perpendiculaire au plan transversal XY. La paroi périphérique 30 prend la forme d'une paroi cylindrique, dont la section, dans le plan transversal XY, comporte des surfaces courbes réfléchissantes S1, S2, S3, S4 et des surfaces planes. Les surfaces courbes peuvent notamment être elliptiques ou paraboliques. Une surface elliptique suit, selon le plan transversal XY, le contour d'une partie d'une ellipse. Une surface parabolique suit, selon le plan transversal XY, le contour d'une partie d'une parabole. Dans les exemples décrits ci-après, les surfaces courbes S1, S2, S3 et S4, sont elliptiques. Une surface réfléchissante courbe peut également être composée de facettes planes, adjacentes les unes des autres, dont l'ensemble décrit une courbe, et en particulier une ellipse.

Le capteur de gaz 1 comporte une source de lumière 11, apte à émettre une onde lumineuse incidente 11'. L'onde lumineuse transmise est réfléchie, à de multiples reprises, par les différentes parties de la paroi périphérique 30, de façon à traverser l'enceinte 10 de nombreuses fois avant d'atteindre un photodétecteur 12, dit photodétecteur de mesure. Le photodétecteur de mesure 12 détecte alors une onde lumineuse 14, dite onde lumineuse transmise, résultant d'une atténuation progressive de l'onde lumineuse 11' émise par la source de lumière au fur et à mesure que l'onde lumineuse se propage à travers l'enceinte 10. La source de lumière 11 est apte à émettre l'onde lumineuse 11', dite onde lumineuse incidente, selon une bande spectrale d'illumination $\Delta\lambda$, cette dernière pouvant s'étendre entre le proche ultraviolet et l'infrarouge moyen, entre 200 nm et 10 $\mu$m, et le plus souvent dans l'infrarouge, notamment entre 1 $\mu$m et 10 $\mu$m. La source de lumière 11 peut notamment être impulsionnelle, l'onde lumineuse incidente 11' étant une impulsion de durée généralement comprise entre 50 ms et 1 s. Il peut notamment s'agir d'une source de lumière de type filament suspendu, parcouru par un courant électrique, et chauffé à une température comprise entre 400°C et 800°C de façon à émettre une lumière infrarouge.

La source de lumière 11 est configurée pour émettre une onde lumineuse 11' selon un cône d'émission $\Omega$1, dit premier cône, s'étendant autour d'un premier axe Al. La source de lumière 11 est disposée à un sommet du premier cône de lumière $\Omega$1.

La paroi périphérique 30 comporte une première surface réfléchissante elliptique S1, configurée pour recevoir tout ou partie du premier cône de lumière $\Omega$1. La première surface S1 présente un premier foyer P1-1 et un deuxième foyer P2-1. Le sommet S1 du premier cône $\Omega$1 est confondu avec le premier foyer P1-1. D'une façon générale, le terme foyer, ou point focal, désigne un foyer de l'ellipse selon une partie de laquelle s'étend la surface réfléchissante.

Le terme confondu est à interpréter avec une certaine tolérance, et peut signifier "être situé dans le voisinage de", le voisinage correspondant à une zone s'étendant à une faible distance d'un point. Par faible distance, il est entendu une distance inférieure à 5 mm, et de préférence inférieure à 1 mm, voire inférieure à 0,5 mm.

Par surface réfléchissante ou élément réfléchissant, on entend une surface ou un élément dont le coefficient de réflexion, dans tout ou partie de la bande spectrale d'illumination $\Delta\lambda$, est supérieur à 50%, et de préférence supérieur à 80%. Une paroi réfléchissante peut être formée à l'aide d'un matériau réfléchissant tel un métal, par exemple de l'or.

La première surface S1 est configurée pour réfléchir le premier cône de lumière $\Omega$1 pour former un deuxième cône de lumière $\Omega$2, s'étendant autour d'un deuxième axe $\Delta$2, ce dernier convergeant vers un premier élément réfléchissant R1 associé à la première surface S1. Dans cet exemple, la première surface S1 suit, dans le plan XY, une partie du contour d'une ellipse *Ea*, dite ellipse d'admission, dont le grand axe *La* est représenté sur la figure 1D. Dans cet exemple, le premier élément réfléchissant R1 est un miroir plan s'étendant perpendiculairement au grand axe *La*. Le premier miroir R1 est une partie plane de la surface périphérique 30. Dans cet exemple, le miroir R1 est un miroir plan. Le deuxième cône Q2 converge vers le deuxième foyer P2-1 de la première surface S1, le deuxième foyer P2-1 étant de préférence situé sur le premier miroir R1, ou à une faible distance de ce dernier.

Le premier miroir R1 réfléchit le deuxième cône de lumière Q2 vers la deuxième surface S2. La deuxième surface S2 présente un premier foyer P1-2 et un deuxième foyer P2-2. Le premier foyer P1-2 de la deuxième surface S2 est confondu avec le deuxième foyer P2-1 de la première surface S1. Ainsi, le deuxième cône de lumière Q2 converge vers le deuxième foyer P2-1 de la première surface S1, ce dernier formant également le premier foyer P1-2 de la deuxième surface S2. La réflexion du deuxième cône Q2 sur le premier miroir R1 permet la formation d'un troisième cône de lumière Q3 s'étendant autour d'un troisième axe $\Delta$3, à partir du deuxième foyer P2-1 de la première surface S1, vers la deuxième surface S2. Le fait que le deuxième foyer P2-1 de la première surface S1 soit confondu avec le premier foyer P1-2 de la deuxième surface S2 permet la formation du troisième cône $\Omega$3, par réflexion du deuxième cône Q2 sur le premier élément réfléchissant R1.

La deuxième surface S2 réfléchit le troisième cône de lumière Q3 pour former un quatrième cône de lumière $\Omega$4, s'étendant autour d'un quatrième axe $\Delta$4, et convergeant vers le deuxième foyer P2-2 de la deuxième surface S2. Ce dernier est disposé sur un deuxième élément réfléchissant R2, par exemple un miroir. Dans cet exemple, le premier élément réfléchissant R1 et le deuxième élément réfléchissant R2 sont forment un même miroir plan R1, s'étendant entre le premier foyer P1-2 et le deuxième foyer P2-2 de la deuxième surface S2. Ainsi, dans cet exemple, le deuxième foyer P2-2 de la deuxième surface S2 est disposé sur le premier miroir R1, ou à faible distance de ce dernier.

Le deuxième élément réfléchissant R2, en l'occurrence le miroir R1, réfléchit le quatrième cône de lumière Q4 vers la troisième surface S3. La troisième surface S3 présente un premier foyer P1-3 et un deuxième foyer P2-3. Le premier foyer P1-3 de la troisième surface S3 est confondu avec le deuxième foyer P2-2 de la deuxième surface S2. Ainsi, le quatrième cône de lumière Q4 converge vers le deuxième foyer P2-2 de la deuxième surface S2, ce dernier formant le premier foyer P1-3

de la troisième surface S3. La réflexion sur le deuxième élément réfléchissant R2 permet la formation d'un cinquième cône de lumière $\Omega5$ s'étendant autour d'un cinquième axe $\Delta5$, à partir du deuxième foyer P2-2 de la deuxième surface S2, vers la troisième surface S3. Le fait que le deuxième foyer P2-2 de la deuxième surface S2 soit confondu avec le premier foyer P1-3 de la troisième surface S3 permet la formation du cinquième cône $\Omega5$, par réflexion du quatrième cône Q4 sur le deuxième élément réfléchissant R2.

La troisième surface S3 réfléchit le cinquième cône de lumière $\Omega5$ pour former un sixième cône de lumière $\Omega6$, s'étendant autour d'un sixième axe $\Delta6$, et convergeant vers le deuxième foyer P2-3 de la troisième surface S3. Ce dernier est disposé sur un troisième élément réfléchissant R3, par exemple un miroir. Dans cet exemple, le troisième élément réfléchissant R3 et le premier élément réfléchissant R1 sont confondus et forment un miroir plan. Ainsi, dans cet exemple, le deuxième foyer P2-3 de la troisième surface S3 est disposé sur le premier miroir R1, ou à faible distance de ce dernier.

Comme on peut l'observer sur la figure 1D, la deuxième surface S2 et la troisième surface S3 décrivent, dans le plan transversal XY, deux parties distinctes d'une même ellipse *Ei*, dite ellipse intermédiaire. Ainsi, les foyers des deuxième et troisième surfaces sont confondus. De ce fait, le premier foyer P1-2 de la deuxième surface S2 est confondu avec le deuxième foyer P2-3 de la troisième surface S3. Le deuxième foyer P2-2 de la deuxième surface S2 est confondu avec le premier foyer P1-3 de la troisième surface S3. Le deuxième foyer P2-3 de la troisième surface S3, vers lequel le sixième cône de lumière $\Omega6$ converge, correspond également au deuxième foyer P2-1 de la première surface S1, correspondant au sommet du deuxième cône $\Omega2$. L'ellipse intermédiaire *Ei*, et son grand axe *Li,* sont représentés sur la figure 1D.

Les foyers P1-2 et P2-2 de la deuxième surface S2, qui correspondent respectivement aux foyers P2-3 et P1-3 de la troisième surface S3, sont alignés selon le grand axe *Li* de l'ellipse intermédiaire *Ei*. Les inventeurs ont montré qu'il était optimal que le grand axe *Li* de l'ellipse intermédiaire soit le plus long possible, en s'étendant selon une longueur de préférence supérieure à 5 mm, voire 8 mm ou 10 mm. Cela permet d'allonger le parcours de l'onde lumineuse 11' entre les surfaces S2 et S3 et leurs foyers. Le demandeur a montré qu'il est préférable que l'angle entre le grand axe *La* de l'ellipse d'admission *Ea,* et le grand axe *Li* de l'ellipse intermédiaire *Ei*, soit compris entre 80° et 100°, et de préférence le plus proche possible de 90°. Les premier, deuxième et troisième éléments réfléchissants sont disposés sur un même miroir s'étendant selon le grand axe *Li* de l'ellipse intermédiaire. Le premier élément réfléchissant R1 et le troisième élément réfléchissant R3 sont, dans cet exemple, confondus.

Le troisième élément réfléchissant R3, en l'occurrence le miroir plan R1, réfléchit le sixième cône de lumière $\Omega6$ vers la quatrième surface S4. La quatrième surface S4 présente un premier foyer P1-4 et un deuxième foyer P2-4. Le premier foyer P1-4 de la quatrième surface S4 est confondu avec le deuxième foyer P2-3 de la troisième surface S3. Ainsi, le sixième cône de lumière $\Omega6$ converge vers le deuxième foyer P2-3 de la troisième surface S3, ce dernier formant le premier foyer P1-4 de la quatrième surface S4. La réflexion sur le troisième élément réfléchissant R3 permet la formation d'un septième cône de lumière $\Omega7$ s'étendant autour d'un septième axe $\Delta7$, à partir du deuxième foyer P2-3 de la troisième surface S3, vers la quatrième surface S4. Le fait que le deuxième foyer P2-3 de la troisième surface S3 soit confondu avec le premier foyer P1-4 de la quatrième surface S4 permet la formation du septième cône $\Omega7$, par réflexion du sixième cône $\Omega6$ sur le troisième élément réfléchissant R3.

La quatrième surface S4 réfléchit le septième cône de lumière $\Omega7$ pour former un huitième et dernier cône de lumière $\Omega8$, s'étendant autour d'un huitième axe $\Delta8$, et convergeant vers le deuxième foyer P2-4 de la quatrième surface S4. Le huitième cône de lumière $\Omega8$ converge vers le deuxième foyer P2-4 de la quatrième surface S4. Le photodétecteur de mesure 12 est disposé dans le huitième cône de lumière $\Omega8$, et de préférence centré par rapport huitième axe $\Delta8$. De préférence, le photodétecteur 12 est situé au niveau du deuxième foyer P2-4 de la quatrième surface S4, ou à faible distance de ce dernier, de façon à maximiser la quantité de lumière collectée. Le photodétecteur de mesure 12 détecte une onde lumineuse 14, dite onde lumineuse transmise, résultant de la transmission de l'onde lumineuse incidente 11' à travers l'enceinte 10. La quatrième surface S4 décrit une partie d'une ellipse *Eo*, dite ellipse de sortie, représentée en pointillés sur la figure 1D.

Le photodétecteur de mesure 12 et la source de lumière 11 peuvent être ménagés à l'intérieur de l'enceinte 10, en étant par exemple disposés au contact de la paroi périphérique 30. De façon alternative, la paroi périphérique comporte au moins une ouverture, ou une fenêtre transparente, de façon à permettre :

-   l'admission, dans l'enceinte 10, de l'onde lumineuse incidente 11' émise par la source de lumière 11 lorsque la source de lumière est située à l'extérieur de l'enceinte ;
-   et/ou la détection, par le photodétecteur de mesure 12, de l'onde lumineuse transmise 14, lorsque le photodétecteur de mesure est situé à l'extérieur de l'enceinte.

La figure 1B montre des tracés de rayons lumineux effectués pour simuler la propagation d'une onde lumineuse 11' à travers l'enceinte, entre la source de lumière 11 et le photodétecteur de mesure 12. Dans l'exemple considéré, le photodétecteur de mesure 12 est une thermopile, apte à délivrer un signal dépendant de l'intensité de l'onde lumineuse 14 à laquelle est exposé le photodétecteur. Il peut également d'agir d'une photodiode ou d'un autre type de photodétecteur. Quel que soit le mode de réalisation, le photodétecteur de mesure 12 peut être couplé à un filtre 18 passe-bande, représenté sur la figure 1A, dont la bande spectrale correspond à une bande spectrale d'absorption d'une espèce gazeuse $G_s$ dont on souhaite déterminer une quantité $C_s$ dans le mélange gazeux. L'intensité $I$ de l'onde lumineuse détectée par le photodétecteur de mesure 12 dépend de la quantité $C_s$ selon la relation de Beer Lambert :

$$att = \frac{I}{I_0} = e^{-\mu(C_s)l} \quad (1) \text{ où :}$$

- $\mu(C_s)$ est un coefficient atténuation, dépendant de la quantité $C_s$ recherchée;
- $l$ est l'épaisseur de gaz traversé par l'onde lumineuse dans l'enceinte ;
- $I_0$ est l'intensité de l'onde lumineuse incidente, qui correspond à l'intensité de l'onde atteignant le photodétecteur de mesure 12 en l'absence de gaz absorbant dans l'enceinte.

La comparaison entre $I$ et $I_0$, prenant la forme d'un ratio $\frac{I}{I_0}$, correspond à une atténuation *att* générée par l'espèce gazeuse considérée. Lors de chaque impulsion de la source de lumière 11, on peut ainsi déterminer $\mu(C_s)$, ce qui permet d'estimer la quantité $C_s$ sachant que la relation entre $C_s$ et $\mu(C_s)$ est connue. On comprend que sous l'effet des multiples réflexions par les surfaces réfléchissantes, l'épaisseur de gaz traversé par l'onde lumineuse augmente, ce qui contribue à abaisser le ratio $\frac{I}{I_0}$. Cela permet, dans une certaine mesure, une estimation plus précise de la quantité estimée $C_s$. Le demandeur considère que le pourcentage optimal d'atténuation peut être compris entre 0.2 et 0.3.

Ainsi, d'une façon générale, le dispositif comporte N surfaces réfléchissantes S*n*, courbes et de préférence elliptiques, avec $1 \le n \le N$, chaque surface réfléchissante décrivant, dans le plan XY, une partie d'une courbe, et de préférence une ellipse, présentant un premier foyer P1-*n* et un deuxième foyer P2-*n* distincts l'un de l'autre. De préférence, lorsque $1 \le n < N$, à chaque surface réfléchissante courbe S*n* est associée un élément réfléchissant R*n*, en particulier un élément réfléchissant plan, de telle sorte que le deuxième foyer P2-*n* de chaque surface réfléchissante S*n* est disposé sur l'élément réfléchissant associé à cette dernière. Les surfaces réfléchissantes s'étendent successivement entre la source de lumière 11 et le photodétecteur de mesure 12.

Lorsque $1 < n < N$, le premier foyer P1-*n* est confondu avec le deuxième foyer P2-(*n* — 1) d'une surface précédente S*n*-1. Le deuxième foyer P2-*n* est confondu avec le premier foyer P1-(*n* + 1) d'une surface suivante S*n*+1. Lorsque *n* = 1 (première surface), le deuxième foyer P2-1 est confondu avec le premier foyer P1-2 d'une surface suivante, en l'occurrence la deuxième surface S2. Lorsque *n* = N (dernière surface), le premier foyer P1-*N* est confondu avec le deuxième foyer P2-(*N* —1) de la surface précédente SN-1. La première surface S1 permet une réflexion de l'onde lumineuse incidente émise par la source de lumière 11, tandis que la dernière surface SN permet une réflexion de l'onde lumineuse, ayant traversé l'enceinte 10, vers le photodétecteur de mesure 12. Dans le mode de réalisation représenté sur les figures 1A à 1D, N = 4. A chaque surface S*n* correspond un rang *n*, compris entre 1 et N. L'onde lumineuse émise par la source de lumière est successivement réfléchie par les différentes surfaces S*n*, selon leurs rangs respectifs, pris dans l'ordre croissant. Autrement dit, les surfaces réfléchissantes S1 ... SN s'étendent successivement entre la source de lumière 11 et le photodétecteur de mesure 12. Le terme s'étendre successivement est à interpréter en considérant la propagation de la lumière entre la source de lumière 11 et le photodétecteur de mesure 12.

Un des objectifs de l'invention est d'optimiser le nombre de réflexions de l'onde lumineuse émise par la source de lumière 11 avant d'atteindre le photodétecteur de mesure 12, tout en respectant, de préférence, un encombrement contraint. Comme représenté sur la figure 1D, l'enceinte 10 peut notamment s'étendre, parallèlement à l'axe X, selon une longueur Lx et, parallèlement à l'axe Y, selon une longueur *Ly*. Les longueurs Lx et *Ly* sont de préférence de l'ordre de 15 mm, et par exemple comprises entre 10 mm et 20 mm, et cela quel que soit le mode de réalisation. Cela permet la constitution d'un capteur particulièrement compact.

Compte tenu des contraintes de dimensionnement relatives à la compacité du capteur, l'inventeur a montré qu'il est préférable que l'ellipse d'admission *Ea,* selon une partie de laquelle s'étend la première surface S1, ait une excentricité inférieure à 0.8, voire inférieure à 0.7 ou à 0.5. Par excentricité d'une surface courbe, présentant un grand rayon *g* et un petit rayon *p*, il est entendu le ratio $e = \frac{\sqrt{g^2 - p^2}}{g} \quad (2)$.

L'excentricité d'une ellipse est comprise entre 0 et 1, une excentricité de valeur nulle correspondant à un cercle. De préférence, l'excentricité de l'ellipse intermédiaire *Ei* est inférieure à l'excentricité de l'ellipse d'admission *Ea,* en étant par exemple proche de 0.3. La deuxième surface *S2* et la troisième surface *S3* s'étendent selon deux parties distinctes de l'ellipse intermédiaire. L'ellipse intermédiaire *Ei* permet alors un allongement significatif du trajet optique entre la source de lumière 11 et le photodétecteur de mesure 12. L'inventeur a estimé qu'une combinaison entre une ellipse d'admission *Ea* d'excentricité inférieure à 0.8, couplée à une ellipse intermédiaire *Ei* d'excentricité inférieure à 0.5, voire à 0.3, permet d'obtenir une atténuation suffisante de l'onde lumineuse se propageant jusqu'au photodétecteur de mesure 12, tout en satisfaisant à la contrainte de compacité.

L'expression (1) suppose une maîtrise de l'intensité $I_0$ de l'onde lumineuse 11' mise par la source de lumière 11. Une telle intensité peut être mesurée en l'absence de gaz dans l'enceinte 10. Selon une variante du mode de réalisation précédent, exposée sur les figures 2A et 2C, le dispositif peut comporter un photodétecteur de référence 13, agencé de telle sorte qu'il détecte une onde lumineuse, dite onde lumineuse de référence $11_{ref}$, atteignant le photodétecteur de référence 13. Le photodétecteur de référence peut en particulier détecter une partie de l'onde lumineuse incidente 11 dans une bande spectrale dans laquelle l'absorption du gaz 2 présent dans l'enceinte 10 est négligeable. La paroi périphérique 30 comporte à cet effet une surface réfléchissante S1ref, elliptique, configurée pour recevoir un cône d'émission, dit de référence $\Omega1_{ref}$. émis par la source de lumière 11, et s'étendant à partir de cette dernière. La surface de référence S1ref réfléchit le cône de référence $\Omega1_{ref}$, d'axe $\Delta1_{ref}$, pour former un cône de référence réfléchi $\Omega2_{ref}$, d'axe $\Delta2_{ref}$, convergeant vers le photodétecteur de référence 13. La surface de référence S1ref décrit une partie d'une ellipse, dont un premier foyer P1-ref est disposé sur la source de lumière 11, ou à faible distance de cette dernière, et dont un deuxième foyer P2-ref est disposé sur le photodétecteur de référence 13, ou à faible distance de ce dernier. Le premier foyer P1-ref de la surface de référence S1ref peut être confondu avec le premier foyer de la première surface S1. La surface de référence S1ref suit une partie du contour d'une ellipse de référence *Eref* représentée en pointillés sur la figure 2C.

La figure 2B montre des tracés de rayons lumineux effectués pour simuler la propagation d'une onde lumineuse 11' à travers l'enceinte, entre la source de lumière 11 et le photodétecteur 12 ainsi que vers le photodétecteur de référence 13.

L'intensité de l'onde lumineuse de référence $11_{ref}$, détectée par le photodétecteur de référence 13, est désignée par le terme intensité de référence $I_{ref}$. Dans cet exemple, le photodétecteur de référence 13 est associé à un filtre optique, dit filtre optique de référence $18_{ref}$. Le filtre optique de référence $18_{ref}$ définit une bande passante correspondant à une plage de longueurs d'onde non absorbées, ou de façon négligeable, par le gaz 2 présent dans l'enceinte 10. La bande passante de référence est par exemple centrée autour de la longueur d'onde 3.91 $\mu$m. La mesure de $I_{ref}$ permet l'estimation de $I_0$, ce qui permet de déterminer $\mu(C_s)$, puis d'estimer $C_s$. La mesure de $I_{ref}$ permet notamment de tenir compte des variations temporelles de l'intensité $I_0$ de l'onde lumineuse 11' émise par la source de lumière 11. Le recours à un photodétecteur de référence 13 constitue une variante préférée de l'invention.

Les figures 3A à 3B illustrent une variante du mode de réalisation précédemment évoqué. Selon ce mode de réalisation, les surfaces S1, S1ref, S2 et S3 sont similaires à celles décrites en lien avec les figures 1A à 1D et 2A à 2C. La quatrième surface S4 est orientée de telle sorte que le photodétecteur de mesure 12 est disposé dos à dos par rapport à la source de lumière 11. Une telle configuration facilite la connexion électrique du photodétecteur de mesure 12 et de la source de lumière 11. On a représenté, sur la figure 3A, le septième cône de lumière $\Omega7$, ainsi que le huitième cône de lumière $\Omega8$, ce dernier formant un dernier cône de lumière convergeant vers le photodétecteur de mesure 12. La figure 3B représente des tracés de rayons correspondant à cette configuration.

Les figures 4A et 4B représentent un mode de réalisation selon lequel le dispositif comporte un nombre N = 5 surfaces réfléchissantes courbes. Les surfaces S1, S1ref, S2, S3 et S4 sont analogues à celles représentées sur la figure 3A. La surface réfléchissante S5, faisant office de dernière surface, est configurée de telle sorte qu'elle suit le contour d'une ellipse dont un premier foyer P1-5 est confondu avec le deuxième foyer P2-4 de la quatrième surface S4. Ces foyers sont placés sur un quatrième élément réfléchissant R4, se présentant par exemple sous la forme d'un miroir plan. Le quatrième élément réfléchissant réfléchit le cône de huitième cône de lumière $\Omega8$, convergeant vers le deuxième foyer P2-4, vers la cinquième surface S5. Il se forme alors un neuvième cône de lumière $\Omega9$, s'étendant à partir du premier foyer P1-5, confondu avec le foyer P2-4, vers la cinquième surface S5. Le neuvième cône de lumière s'étend autour d'un neuvième axe $\Delta9$. La cinquième surface réfléchissante S5 réfléchit le neuvième cône de lumière $\Omega9$ pour former un dixième cône de lumière $\Omega10$ convergeant vers le deuxième foyer P2-5. Le photodétecteur de mesure 12 est disposé dans le dixième cône de lumière $\Omega10$, de façon à recueillir une onde lumineuse 14 transmise par le gaz 2 présent dans l'enceinte. Le tableau 1 représente le grand axe (a), le petit axe (b), la distance entre le centre de l'ellipse et un de ses foyers (c), et l'excentricité (e) des ellipses selon une partie desquelles s'étendent les surfaces S1 à S5.

Tableau 1

|  | a (mm) | b (mm) | c (mm) | e |
|---|---|---|---|---|
| S1 | 6.70 | 4.85 | 4.62 | 0.69 |
| S2, S3 | 5.73 | 5.57 | 1.38 | 0.24 |
| S4 | 6.35 | 4.99 | 3.94 | 0.62 |
| S5 | 4.31 | 3.51 | 2.50 | 0.58 |
| S1ref | 3.65 | 2.33 | 2.80 | 0.77 |

Les inventeurs ont réalisé des simulations de fonctionnement d'un capteur de lumière tel que décrit en lien avec les figures 2A et 2B. Les paramètres des ellipses, selon lesquelles s'étendent les surfaces réfléchissantes, sont répertoriés dans le tableau 2. Il s'agit des dimensions du grand axe (a), du petit axe (b), de la distance entre le centre de l'ellipse et de l'un de ses foyers (c), et de l'excentricité (e).

Tableau 2

|  | a (mm) | b (mm) | c (mm) | e |
|---|---|---|---|---|
| Ea | 6.70 | 4.91 | 4.56 | 0.68 |
| Eref | 5.79 | 5.62 | 1.39 | 0.24 |
| Ei | 4.24 | 2.92 | 3.07 | 0.72 |
| Eo | 3.78 | 2.54 | 2.80 | 0.74 |

Les figures 5A à 5B représentent les résultats de simulations des performances d'un capteur de gaz pour différentes concentrations de méthane (CH4). On a simulé la propagation d'une onde lumineuse entre la source de lumière et le photodétecteur de mesure entre une configuration de référence, telle que décrite dans le document EP3208601 et la configuration, selon l'invention, décrite dans le tableau précédent. Sur chaque figure 5A à 5B, les performances de la configuration selon l'invention et de la configuration de référence sont respectivement représentées par une courbe en pointillés et une courbe en traits pleins.

La figure 5A montre une évolution de l'intensité relative mesurée par le photodétecteur de mesure en fonction de de la concentration en méthane. La valeur de 100% correspond, dans chaque configuration, à une intensité mesurée en l'absence de méthane. On observe que la configuration selon l'invention permet d'augmenter l'atténuation de l'onde lumineuse, en utilisant une enceinte aussi compacte que la configuration de référence.

La figure 5B montre l'évolution de la résolution, exprimée en ppm (parties par million), en fonction de la concentration en CH4, également exprimée en ppm. La résolution correspond à la variation minimale de concentration de gaz détectable. On observe que la résolution est plus favorable en mettant en œuvre l'invention.

Les inventeurs ont également réalisé des simulations de fonctionnement d'un capteur de lumière tel que décrit en lien avec les figures 3A et 3B. Les paramètres des ellipses sont listés dans le tableau 3:

Tableau 3

|  | a (mm) | b (mm) | c (mm) | e |
|---|---|---|---|---|
| Ea | 6.70 | 4.85 | 4.62 | 0.69 |
| Eref | 5.73 | 5.57 | 1.38 | 0.24 |
| Ei | 6.35 | 4.99 | 3.94 | 0.62 |
| Eo | 3.65 | 2.33 | 2.80 | 0.77 |

On a simulé la propagation d'une onde lumineuse entre la source de lumière et le photodétecteur dans la configuration de référence, précédemment décrite, et la configuration selon l'invention décrite en lien avec le tableau 2. La figure 5C montre l'évolution de la résolution, exprimée en ppm, en fonction de la concentration en CH4, également exprimée en ppm. On observe à nouveau que la résolution est plus favorable en mettant en œuvre l'invention (courbe en pointillés), qu'en mettant en œuvre la configuration de référence (trait plein).

Dans les exemples de réalisation présentés ci-avant, les N surfaces réfléchissantes du capteur sont elliptiques. L'invention ne se limite pas à cette configuration, le capteur pouvant comprendre au moins une surface réfléchissante courbe, présentant un premier foyer et un deuxième foyer, les deux foyers étant distincts l'un de l'autre.

L'invention pourra être mise en œuvre dans des capteurs de gaz, en particulier des capteurs compacts. Elle permet d'optimiser l'atténuation de l'onde lumineuse émise par la source de lumière dans une enceinte compacte.

**Revendications**

1. Capteur (1) de gaz comportant une enceinte (10), apte à recevoir le gaz (2), le capteur comportant également :

   ▪ une source de lumière (11), configurée pour émettre une onde lumineuse (11') se propageant dans l'enceinte (10) en formant, à partir de la source de lumière, un cône d'émission ($\Omega$1), dit premier cône;
   ▪ un photodétecteur de mesure (12) apte à détecter l'onde lumineuse émise par la source de lumière (11) et s'étant propagé à travers l'enceinte;

   le capteur étant tel que l'enceinte (10) s'étend entre deux parois transversales (21, 22), disposées l'une face à l'autre, les parois transversales étant reliées l'une à l'autre par une paroi périphérique (30), s'étendant entre les parois transversales, la paroi périphérique (30) comportant :

   ▪ une première surface réfléchissante (S1), de rang 1, courbe, d'excentricité inférieure à 0.7, et présentant un premier foyer (P1-1) et un deuxième foyer (P1-2), la première surface réfléchissante étant disposée face à la source de lumière (11);
   ▪ au moins une surface réfléchissante (Sn) de rang n, courbe, n étant un entier strictement supérieur à 1, chaque surface de rang n présentant :

   - un premier foyer (P1-n), confondu avec le deuxième foyer d'une surface réfléchissante de rang précédent n-1 ;

- un deuxième foyer (P2-*n*), distinct du premier foyer (P1-*n*), confondu avec le premier foyer d'une surface de rang suivant n+1 ;

■ une dernière surface réfléchissante (SN), de rang N, courbe, comportant un premier foyer (P1-*N*), confondu avec le deuxième foyer d'une surface réfléchissante de rang précédent N-1, la dernière surface réfléchissante comportant également un deuxième foyer (P2-*N*);

de telle sorte que l'onde lumineuse (11') émise par la source de lumière (11) est successivement réfléchie par les surfaces réfléchissantes, selon leur rang respectif, avant de converger vers le deuxième foyer (P2-*N*) de la dernière surface réfléchissante (S*N*) en formant un dernier cône de lumière ($\Omega 8$, $\Omega 10$), le photodétecteur de mesure (12) étant disposé, par rapport à la dernière surface réfléchissante (S*N*) de manière à s'étendre dans le dernier cône de lumière.

2. Capteur selon la revendication 1, dans lequel lorsque $1 \leq n < N$, à au moins une surface réfléchissante courbe (S*n*) est associé un élément réfléchissant (R*n*), le deuxième foyer (P2-*n*) de ladite surface réfléchissante étant disposé sur l'élément réfléchissant associé à cette dernière.

3. Capteur selon la revendication 2, dans lequel lorsque $1 \leq n < N$, à chaque surface réfléchissante (S*n*) est associé un élément réfléchissant (R*n*), le deuxième foyer (P2-*n*) de chaque surface réfléchissante étant disposé sur l'élément réfléchissant associé à cette dernière.

4. Capteur selon l'une quelconque des revendications 2 ou 3, dans lequel deux éléments réfléchissants (R1, R3), respectivement associés à deux surfaces différentes (S1, S3), sont confondus.

5. Capteur selon l'une quelconque des revendications 1 à 4, dans lequel au moins une surface réfléchissante courbe est elliptique ou dans lequel chaque surface réfléchissante courbe est elliptique.

6. Capteur selon l'une quelconque des revendications précédentes, dans lequel le premier foyer (P1-1) de la première surface (S1) est confondu avec le sommet du premier cône ($\Omega 1$).

7. Capteur selon l'une quelconque des revendications précédentes, comportant également :

- un photodétecteur de référence (13);
- une surface réfléchissante courbe, dite de référence (S1ref), comportant un premier foyer (P1-ref) et un deuxième foyer (P2-ref), le premier foyer (P1-ref) de la surface de référence étant situé dans un cône de lumière, dit premier cône de référence ($\Omega 1_{ref}$), émis par la source de lumière (11) ;

de telle sorte que la surface de référence (S1ref) réfléchit une partie du premier cône de référence vers le photodétecteur de référence (13), pour former un deuxième cône de référence ($\Omega 2_{ref}$) convergeant vers le deuxième foyer (P2-ref) de la surface de référence (S1ref), le photodétecteur de référence (13) s'étendant dans le deuxième cône de référence.

8. Capteur selon la revendication 7, dans lequel le premier foyer (P1-ref) de la surface de référence (S1$_{ref}$) est confondu avec le sommet du premier cône de référence ($\Omega 1_{ref}$).

9. Capteur selon l'une quelconque des revendications 1 à 8, comportant quatre surfaces réfléchissantes distinctes (S1, S2, S3, S4), s'étendant successivement entre la source de lumière (11) et le photodétecteur de mesure (12), le photodétecteur de mesure (12) étant configuré pour détecter une onde lumineuse réfléchie par une quatrième surface (S4), formant la dernière surface réfléchissante, et convergeant vers le deuxième foyer (P2-4) de cette dernière.

10. Capteur selon l'une quelconque des revendications 1 à 8, comportant cinq surfaces réfléchissantes distinctes, s'étendant successivement entre la source de lumière (11) et le photodétecteur de mesure (12), le photodétecteur de mesure (12) étant configuré pour détecter une onde lumineuse réfléchie par une cinquième surface (S5), formant la dernière surface réfléchissante, et convergeant vers le deuxième foyer (P2-5) de cette dernière.

11. Capteur selon l'une quelconque des revendications 9 ou 10, dans lequel la deuxième surface réfléchissante (S2) et la troisième surface réfléchissante (S3), s'étendent respectivement selon deux parties distinctes d'une même ellipse *(Ei),* dite ellipse intermédiaire.

12. Capteur selon la revendication 11, dans lequel la première surface s'étend selon une partie d'une ellipse, dite ellipse d'admission (Ea), présentant un grand axe (La), ce dernier formant un angle compris entre 80° et 100° avec un grand axe (Li) de l'ellipse intermédiaire *(Ei).*

13. Capteur selon la revendication 12, comportant un élément réfléchissant plan (R1, R2, R3), sur lequel sont disposés :

- le deuxième foyer (P2-1) de la première surface (S1), ce dernier étant confondu avec le premier foyer (P1-2) de la deuxième surface (S2) ainsi qu'avec le deuxième foyer (P2-3) de la troisième surface (S3) et avec le premier foyer (P1-4) d'une quatrième surface (S4);

- le deuxième foyer (P2-2) de la deuxième surface (S2), ce dernier étant confondu avec le premier foyer (P1-3) de la troisième surface (S3).

14. Capteur selon l'une quelconque des revendications précédentes, dans lequel la paroi transversale (30) est, au moins partiellement, ouverte ou transparente, de manière à permettre une propagation de l'onde lumineuse émise par la source de lumière, et/ou de l'onde lumineuse détectée par le photodétecteur de mesure.

15. Procédé d'analyse d'un gaz (2) à l'aide d'un capteur (1) selon l'une quelconque des revendications précédentes, le procédé comportant les étapes suivantes :

- introduction du gaz dans l'enceinte (10) du capteur (1);
- illumination du gaz à l'aide de la source de lumière (11) ;
- mesure d'une intensité lumineuse d'une onde lumineuse, émise par la source de lumière, et s'étant propagée à travers l'enceinte (10) par le photodétecteur de mesure (12) ;
- détermination d'une quantité d'une espèce gazeuse dans le gaz, à partir de l'intensité lumineuse mesurée.

**Patentansprüche**

1. Gassensor (1) aufweisend eine Einhausung (10), die geeignet ist, das Gas (2) aufzunehmen, der Sensor umfassend ebenfalls:

- eine Lichtquelle (11), die dazu ausgebildet ist, eine Lichtwelle (11') zu emittieren, die sich in der Einhausung (10) ausbreitet, wobei sie ausgehend von der Lichtquelle einen Emissionskegel ($\Omega 1$), den ersten Kegel, bildet;
- einen Mess-Photodetektor (12), der geeignet ist, die Lichtwelle zu detektieren, die von der Lichtquelle (11) emittiert wird und sich durch die Einhausung ausgebreitet hat;

wobei der Sensor so beschaffen ist, dass sich die Einhausung (10) zwischen zwei Querwänden (21, 22) erstreckt, die einander gegenüber angeordnet sind, wobei die Querwände durch eine Umfangswand (30) miteinander verbunden sind, die sich zwischen den Querwänden erstreckt, wobei die Umfangswand (30) Folgendes aufweist:

- eine erste, gekrümmte reflektierende Fläche (S1) des Rangs 1 mit einer Exzentrität kleiner als 0,7 und mit einem ersten Brennpunkt (P1-1) und einem zweiten Brennpunkt (P1-2), wobei die erste reflektierende Fläche gegenüber der Lichtquelle (11) angeordnet ist;
- mindestens eine gekrümmte reflektierende Fläche (Sn) des Rangs $n$, wobei $n$ eine Ganzzahl streng größer als 1 ist, wobei jede Fläche des Rangs $n$ Folgendes aufweist:

  - einen ersten Brennpunkt (P1-$n$), der mit dem zweiten Brennpunkt einer reflektierenden Fläche des vorhergehenden Rangs $n$-1 zusammenfällt;
  - einen zweiten Brennpunkt (P2-$n$), der vom ersten Brennpunkt (P1-$n$) gesondert ist, der mit dem ersten Brennpunkt einer Fläche des folgenden Rangs $n$+1 zusammenfällt;

- eine letzte gekrümmte reflektierende Fläche (S$N$) des Rangs N, die einen ersten Brennpunkt (P1-$N$) aufweist, der mit dem zweiten Brennpunkt einer reflektierenden Fläche des vorhergehenden Rangs $N$-1 zusammenfällt, wobei die letzte reflektierende Fläche ebenfalls einen zweiten Brennpunkt (P2-$N$) aufweist; so dass die Lichtwelle (11'), die von der Lichtquelle (11) emittiert wird, von den reflektierenden Flächen gemäß derem jeweiligen Rang sukzessiv reflektiert wird, bevor sie zum zweiten Brennpunkt (P2-$N$) der letzten reflektierenden Fläche (S$N$) konvergiert, wobei sie einen letzten Lichtkegel ($\Omega 8$, $\Omega 10$) bildet, wobei der Mess-Photodetektor (12) bezogen auf die letzte reflektierende Fläche (S$N$) so angeordnet ist, dass er sich im letzen Lichtkegel erstreckt.

2. Sensor nach Anspruch 1, wobei, wenn $1 \leq n < N$, mindestens einer gekrümmten reflektierenden Fläche (Sn) ein reflektierendes Element (R$n$) zugeordnet ist, wobei der zweite Brennpunkt (P2-$n$) der reflektierenden Fläche auf dem reflektierenden Element angeordnet ist, das letzterer zugeordnet ist.

3. Sensor nach Anspruch 2, wobei, wenn $1 \leq n < N$, jeder reflektierenden Fläche (S$n$) ein reflektierendes Element (R$n$) zugeordnet ist, wobei der zweite Brennpunkt (P2-$n$) jeder reflektierenden Fläche auf dem reflektierenden Element angeordnet ist, das letzterer zugeordnet ist.

4. Sensor nach einem der Ansprüche 2 oder 3, wobei zwei reflektierende Elemente (R1, R3), die jeweils zwei verschiedenen Flächen (S1, S3) zugeordnet sind, zusammenfallen.

5. Sensor nach einem der Ansprüche 1 bis 4, wobei mindestens eine gekrümmte reflektierende Fläche ellipsenförmig ist oder jede gekrümmte reflektierende Fläche ellipsenförmig ist.

6. Sensor nach einem der vorhergehenden Ansprüche, wobei der erste Brennpunkt (P1-1) der ersten Fläche (S1) mit dem Scheitelpunkt des ersten Kegels (Ω1) zusammenfällt.

7. Sensor nach einem der vorhergehenden Ansprüche, aufweisend ebenfalls:

   - einen Referenz-Photodetektor (13);
   - eine gekrümmte reflektierende Referenzfläche (S1ref), die einen ersten Brennpunkt (P1-ref) und einen zweiten Brennpunkt (P2-ref) aufweist, wobei sich der erste Brennpunkt (P1-ref) der Referenzfläche in einem Lichtkegel, dem ersten Referenzkegel ($\Omega 1_{ref}$) befindet, der von der Lichtquelle (11) emittiert wird;

   so dass die Referenzfläche (S1ref) einen Abschnitt des ersten Referenzkegels zum Referenz-Photodetektor (13) reflektiert, um einen zweiten Referenzkegel ($\Omega 2_{ref}$) zu bilden, der zum zweiten Brennpunkt (P2-ref) der Referenzfläche (S1ref) konvergiert, wobei sich der Referenz-Photodetektor (13) im zweiten Referenzkegel erstreckt.

8. Sensor nach Anspruch 7, wobei der erste Brennpunkt (P1-ref) der Referenzfläche ($S1_{ref}$) mit dem Scheitelpunkt des ersten Referenzkegels ($\Omega 1_{ref}$) zusammenfällt.

9. Sensor nach einem der Ansprüche 1 bis 8, aufweisend vier gesonderte reflektierende Flächen (S1, S2, S3, S4), die sich nacheinander zwischen der Lichtquelle (11) und dem Mess-Photodetektor (12) erstrecken, wobei der Mess-Photodetektor (12) dazu ausgebildet ist, eine Lichtwelle zu detektieren, die von einer vierten Fläche (S4) reflektiert wird, die die letzte reflektierende Fläche bildet, und zum zweiten Brennpunkt (P2-4) letzterer konvergiert.

10. Sensor nach einem der Ansprüche 1 bis 8, aufweisend fünf gesonderte reflektierende Flächen, die sich nacheinander zwischen der Lichtquelle (11) und dem Mess-Photodetektor (12) erstrecken, wobei der Mess-Photodetektor (12) dazu ausgebildet ist, eine Lichtwelle zu detektieren, die von einer fünften Fläche (S5) reflektiert wird, die die letzte reflektierende Fläche bildet, und zum zweiten Brennpunkt (P2-5) letzterer konvergiert.

11. Sensor nach einem der Ansprüche 9 oder 10, wobei sich die zweite reflektierende Fläche (S2) und die dritte reflektierende Fläche (S3) jeweils auf zwei gesonderten Abschnitten einer selben Ellipse (Ei), der Zwischenellipse, erstrecken.

12. Sensor nach Anspruch 11, wobei sich die erste Fläche auf einem Abschnitt einer Ellipse, der Aufnahmeellipse (Ea) erstreckt, die eine Hauptachse (La) aufweist, wobei letztere einen Winkel zwischen 80° und 100° mit einer Hauptachse (Li) der Zwischenellipse (Ei) bildet.

13. Sensor nach Anspruch 12, aufweisend ein ebenes reflektierendes Element (R1, R2, R3) auf dem Folgendes angeordnet ist:

   - der zweite Brennpunkt (P2-1) der ersten Fläche (S1), wobei letzterer mit dem ersten Brennpunkt (P1-2) der zweiten Fläche (S2) sowie mit dem zweiten Brennpunkt (P2-3) der dritten Fläche (S3) und mit dem ersten Brennpunkt (P1-4) einer vierten Fläche (54) zusammenfällt;
   - der zweite Brennpunkt (P2-2) der zweiten Fläche (S2), wobei letzterer mit dem ersten Brennpunkt (P1-3) der dritten Fläche (S3) zusammenfällt.

14. Sensor nach einem der vorhergehenden Ansprüche, wobei die Querwand (30) wenigstens teilweise offen oder transparent ist, so dass sie eine Ausbreitung der Lichtwelle, die von der Lichtquelle emittiert wird, und/oder der Lichtwelle, die vom Mess-Photodetektor detektiert wird, gestattet.

15. Verfahren zur Analyse eines Gases (2) mithilfe eines Sensors (1) nach einem der vorhergehenden Ansprüche, wobei das Verfahren die folgenden Schritte aufweist:

   - Einleiten des Gases in die Einhausung (10) des Sensors (1);
   - Beleuchten des Gases mithilfe der Lichtquelle (11);
   - Messen einer Lichtstärke einer Lichtwelle, die von der Lichtquelle emittiert wird und sich durch die Einhausung (10) ausgebreitet hat, durch den Mess-Photodetektor (12);
   - Bestimmen einer Menge einer Gasspezies in dem Gas anhand der gemessenen Lichtstärke.

**Claims**

1. Gas sensor (1) comprising an enclosure (10), capable of receiving the gas (2), the sensor also comprising:

   • a light source (11), configured to emit a light wave (11') that is propagated in the enclosure (10) by forming, from the light source, an emission cone (Ω1), called first cone;

- a measurement photodetector (12) capable of detecting the light wave emitted by the light source (11) and being propagated through the enclosure;

the sensor being such that the enclosure (10) extends between two transverse walls (21, 22), positioned facing one another, the transverse walls being linked to one another by a peripheral wall (30), extending between the transverse walls, the peripheral wall (30) comprising:

- a first reflecting surface (S1), of rank 1, curved, of less than 0.7 eccentricity, and having a first focus (P1-1) and a second focus (P1-2), the first reflecting surface being positioned facing the light source (11);
- at least one reflecting surface (Sn) of rank $n$, curved, $n$ being an integer number strictly greater than 1, each surface of rank $n$ having:

    - a first focus (P1-$n$), coinciding with the second focus of a reflecting surface of preceding rank n-1;
    - a second focus (P2-$n$), distinct from the first focus (P1-$n$), coinciding with the first focus of a surface of next rank $n$+1;

- a last reflecting surface (S$N$), of rank N, curved, comprising a first focus (P1-$N$), coinciding with the second focus of a reflecting surface of preceding rank $N$-1, the last reflecting surface also comprising a second focus (P2-$N$);

such that the light wave (11') emitted by the light source (11) is successively reflected by the reflecting surfaces, according to their respective rank, before converging towards the second focus (P2-$N$) of the last reflecting surface (S$N$) by forming a last light cone ($\Omega 8$, $\Omega 10$), the measurement photodetector (12) being positioned, with respect to the last reflecting surface (S$N$) so as to extend into the last light cone.

2. Sensor according to Claim 1, wherein, when $1 \leq n < N$, at least one curved reflecting surface (Sn) has an associated reflecting element (Rn), the second focus (P2-$n$) of said reflecting surface being positioned on the reflecting element associated therewith.

3. Sensor according to Claim 2, wherein, when $1 \leq n < N$, each reflecting surface (Sn) has an associated reflecting element (Rn), the second focus (P2-$n$) of each reflecting surface being positioned on the reflecting element associated therewith.

4. Sensor according to either one of Claims 2 and 3, wherein two reflecting elements (R1, R3), respectively associated with two different surfaces (S1, S3), are merged.

5. Sensor according to any one of Claims 1 to 4, wherein at least one curved reflecting surface is elliptical or wherein each curved reflecting surface is elliptical.

6. Sensor according to any one of the preceding claims, wherein the first focus (P1-1) of the first surface (S1) coincides with the vertex of the first cone ($\Omega 1$).

7. Sensor according to any one of the preceding claims, also comprising:

    - a reference photodetector (13);
    - a curved reflecting surface, called reference surface (S1ref), comprising a first focus (P1-ref) and a second focus (P2-ref), the first focus (P1-ref) of the reference surface being situated in a light cone, called first reference cone ($\Omega 1_{ref}$), emitted by the light source (11);

such that the reference surface (S1 ref) reflects a part of the first reference cone towards the reference photodetector (13), to form a second reference cone ($\Omega 2_{ref}$) converging towards the second focus (P2-ref) of the reference surface (S1ref), the reference photodetector (13) extending into the second reference cone.

8. Sensor according to Claim 7, wherein the first focus (P1-ref) of the reference surface (S1$_{ref}$) coincides with the vertex of the first reference cone ($\Omega 1_{ref}$).

9. Sensor according to any one of Claims 1 to 8, comprising four distinct reflecting surfaces (S1, S2, S3, S4), extending successively between the light source (11) and the measurement photodetector (12), the measurement photodetector (12) being configured to detect a light wave reflected by a fourth surface (S4), forming the last reflecting surface, and converging towards the second focus (P2-4) thereof.

10. Sensor according to any one of Claims 1 to 8, comprising five distinct reflecting surfaces, extending successively between the light source (11) and the measurement photodetector (12), the measurement photodetector (12) being configured to detect a light wave reflected by a fifth surface (S5), forming the last reflecting surface, and converging towards the second focus (P2-5) thereof.

11. Sensor according to either one of Claims 9 and 10, wherein the second reflecting surface (S2) and the third reflecting surface (S3) extend respectively along two distinct parts of one and the same ellipse (*Ei*), called intermediate ellipse.

**12.** Sensor according to Claim 11, wherein the first surface extends along a part of an ellipse, called admission ellipse (*Ea*), having a major axis (*La*), the latter forming an angle of between 80° and 100° with a major axis (*Li*) of the intermediate ellipse (*Ei*).

**13.** Sensor according to Claim 12, comprising a planar reflecting element (R1, R2, R3), on which there are positioned:

> - the second focus (P2-1) of the first surface (S1), the latter coinciding with the first focus (P1-2) of the second surface (S2) and with the second focus (P2-3) of the third surface (S3) and with the first focus (P1-4) of a fourth surface (S4);
> - the second focus (P2-2) of the second surface (S2), the latter coinciding with the first focus (P1-3) of the third surface (S3).

**14.** Sensor according to any one of the preceding claims, wherein the transverse wall (30) is, at least partially, open or transparent, so as to allow a propagation of the light wave emitted by the light source, and/or of the light wave detected by the measurement photodetector.

**15.** Method for analysing a gas (2) using a sensor (1) according to any one of the preceding claims, the method comprising the following steps:

> - introduction of the gas into the enclosure (10) of the sensor (1);
> - illumination of the gas using the light source (11);
> - measurement of a light intensity of a light wave, emitted by the light source, and being propagated through the enclosure (10), by the measurement photodetector (12);
> - determination of a quantity of a gaseous species in the gas, from the measured light intensity.

**Fig. 1A**

**Fig. 1B**

**Fig. 1C**

**Fig. 1D**

**Fig. 2A**

**Fig. 2B**

**Fig. 2C**

**Fig. 3A**

**Fig. 3B**

**Fig. 4A**

**Fig. 4B**

**Fig. 5A**

**Fig. 5B**

**Fig. 5C**

**RÉFÉRENCES CITÉES DANS LA DESCRIPTION**

**Documents brevets cités dans la description**

- US 5026992 A
- WO 2007064370 A
- EP 2711687 A
- EP 2891876 A
- EP 3208601 A
- WO 2004042374 A1